# EUROPEAN PATENT APPLICATION

(11) **EP 4 215 484 A1**
(43) Date of publication of application: **26.07.2023**
(21) Application number: 21869003.0
(22) Date of filing: 13.07.2021
(51) Int. Cl.: C01B 33/113, H01M 4/48

(54) **SILICON MONOXIDE GAS GENERATING MATERIAL AND SILICON MONOXIDE GAS CONTINUOUS GENERATION METHOD**

(30) Priority: 16.09.2020 JP 2020155272
(71) Applicant: OSAKA Titanium Technologies Co., Ltd., Amagasaki-shi, Hyogo 660-8533 (JP)
(72) Inventor: KASHITANI, Yusuke, Amagasaki-shi, Hyogo 660-8533 (JP)
(74) Representative: TBK
(86) International application number: PCT/JP2021/026236
(87) International publication number: WO 2022/059316

(57) **Abstract**

An object of the present invention is to provide a silicon monoxide gas generating raw material in which a reaction that generates a silicon monoxide (SiO) gas is hardly inhibited. The silicon monoxide gas generating raw material according to the present invention has a water content of 0.6 wt % or less.

## Description

### TECHNICAL FIELD

The present invention relates to a silicon monoxide (SiO) gas generating raw material. The invention also relates to a method for continuously generating silicon monoxide gas.

### BACKGROUND ART

"A powder for a negative electrode material which is a silicon oxide powder having an average composition represented by SiOₓ (0.5<x<1.5), wherein when XRD measurement was performed, only one broad crystal peak having a half width of 2° or more is detected only at 10 to 40° in a diffractive angle 2θ=10 to 60°, and when the intensity of the broad crystal peak is P1, the intensity P2 of the other crystal peak satisfies P2/P1<0.1" has been proposed in the past (see, for example, Unexamined Japanese Patent Publication No. 2019-67644, etc).

### PRIOR ART DOCUMENT

### PATENT DOCUMENT

PATENT DOCUMENT 1: Unexamined Japanese Patent Publication No. 2019-67644

### SUMMARY OF THE INVENTION

### PROBREM TO BE SOLVED BY THE INVENTION

By the way, a mixed powder of silicon (Si) alone and silicon dioxide (SiO₂) or the like is heat-treated to generate silicon monoxide (SiO) gas, the generated silicon monoxide gas is cooled, and the deposited silicon oxide (SiOₓ) is pulverized, whereby a silicon oxide powder as described in Patent Document 1 can be obtained. Such a mixed powder adsorbs water in the air when it is stored for a long time in a relatively high humidity environment or the like. Then, when the mixed powder that adsorbs water (water content (wt %) is higher) is heat-treated to generate silicon monoxide gas, a large amount of water vapor (H₂0) and a large amount of hydrogen (H₂) gas are also generated. When a large amount of water vapor, a large amount of hydrogen gas, or the like is generated, the internal pressure in the reaction chamber increases, and the reaction in which the silicon monoxide gas is generated is inhibited.

An object of the present invention is to provide a silicon monoxide gas generating raw material in which a reaction that generates silicon monoxide gas is hardly inhibited.

### MEANS FOR SOLVING THE PROBLEMS

A silicon monoxide gas generating raw material according to a first aspect of the present invention has a water content of 0.6 wt % or less.

As described above, the silicon monoxide gas generating raw material has a water content of 0.6 wt % or less. Therefore, when this silicon monoxide gas generating raw material is heat-treated to generate the silicon monoxide gas, the generation amounts of water vapor (H₂0), hydrogen (H₂) gas, and the like can be suppressed. Therefore, by using the silicon monoxide gas generating raw material, it is possible to accelerate the reaction that generates the silicon monoxide (SiO) gas. Here, the water content of the silicon monoxide gas generating raw material is preferably 0.6 wt % or less, more preferably 0.3 wt % or less, particularly preferably 0.1 wt % or less. Incidentally, the water content of the silicon monoxide gas generating raw material after being dry-treated may be measured.

The silicon monoxide gas generating raw material according to a second aspect of the present invention is the silicon monoxide gas generating raw material according to the first aspect, and contains at least one of SiOz (silicon dioxide) and silicate, and silicon (Si).

When the water content (wt %) of the silicon monoxide gas generating raw material containing "at least one of silicon dioxide and silicate" and "silicon" is high, a large amount of water vapor or the like is generated by heat-treatment, and silicon may oxidize. On the other hand, in the silicon monoxide gas generating raw material according to the second aspect, the generation amount of water vapor or the like due to the heat-treatment can be suppressed, so that the oxidation of silicon can be prevented. Therefore, by using the silicon monoxide gas generating raw material according to the second aspect, it is possible to prevent a decrease in yield of the silicon monoxide gas generating raw material.

The silicon monoxide gas generating raw material according to a third aspect of the present invention is the silicon monoxide gas generating raw material according to the second aspect, and the silicate is lithium silicate.

As a result of intensive studies by the inventors, it was found that when a silicon monoxide gas generating raw material containing lithium silicate and silicon is mixed with water, molded, dried and granulated, lithium silicate and silicon are strongly bonded. Therefore, this silicon monoxide gas generating raw material has mechanical strength when it contains silicate (lithium silicate). Here, lithium silicate is a complex oxide of lithium oxide (Li₂O) and silicon dioxide (SiO₂), and preferably has a molar ratio of Li₂O/SiO₂<2, more preferably Li₂O/SiO₂≤1, particularly preferably Li₂O/SiO₂≤0.5.

In a method for continuously generating silicon monoxide gas according to a fourth aspect of the present invention, the silicon monoxide gas generating raw material according to any one of the first to third aspects is continuously charged into a reaction chamber for generating silicon monoxide gas.

As described above, in this method for continuously generating silicon monoxide gas, the silicon monoxide gas generating raw material according to any one of the first to third aspects is continuously charged into a reaction chamber for generating the silicon monoxide gas (that is, a reaction chamber for heat-treating the silicon monoxide gas generating raw material). Therefore, it is possible to suppress the generation amount of water vapor, hydrogen gas, and the like while the silicon monoxide gas is generated. Therefore, in this method for continuously generating silicon monoxide gas, the silicon monoxide gas can be continuously generated without inhibiting the reaction that generates the silicon monoxide gas.

### BRIEF DESCRIPTION OF THE DRAWINGS

[Fig. 1]It is a schematic view of a manufacturing apparatus of active material particles using a silicon monoxide gas generating raw material according to an embodiment of the present invention.
[Fig. 2]It is a schematic view of adding a drying mechanism to the manufacturing apparatus shown in Fig.1.

### REFERENCE SIGNS LIST

- 100: Vapor-deposition apparatus
- 110: Crucible
- 120: Heater
- 130: Vapor-deposition drum
- 141: Scraper
- 143: Particle guide
- 150: Chamber
- 151: Chamber body portion
- 152: Collection portion
- 153: Exhaust pipe
- 160: Raw material supply hopper
- 170: Raw material introducing pipe
- 180: Collection container
- 190: Collection pipe
- 200: Drying mechanism
- 210: Raw material introducing pipe
- Gg: Gas guide
- OP: Opening
- RM: Deposition chamber
- Sr: Silicon monoxide gas generating raw material
- VL1: First valve
- VL2: Second valve

### MODE FOR CARRYING OUT THE INVENTION

The silicon monoxide gas generating raw material Sr according to the embodiment of the present invention is used for generating the silicon monoxide (SiO) gas. As the silicon monoxide gas generating raw material Sr, for example, "a mixed powder of silicon (Si) and silicon dioxide (SiO₂)" or "a mixed powder of silicon and silicate such as lithium silicate (Li₂Si₂O₅ or the like) or the like" is used. The "mixed powder of silicon and silicon dioxide" is used when manufacturing silicon oxide particles, and is heat-treated to generate the silicon monoxide gas. The "mixed powder of silicon and a silicate such as lithium silicate" is used when manufacturing metal element-containing silicon oxide particles, and is heat-treated to generate the silicon monoxide gas containing the metal element such as lithium (Li) or the like. Incidentally, the metal element may be an element capable of reducing silicon monoxide and stabilizing oxygen, such as an alkali metal such as sodium (Na) or the like in addition to lithium, an alkaline earth metal such as magnesium (Mg) and calcium (Ca) or the like.

Incidentally, the silicon monoxide gas generating raw material Sr according to the embodiment of the present invention is dry-treated (described later) before being heat-treated. This dry-treatment is performed to reduce the amount of water in the silicon monoxide gas generating raw material Sr. Examples of the dry-treatment method include heat-drying, reduced pressure drying and the like.

Then, the active material particles are manufactured from the silicon monoxide gas generated by heat-treating the silicon monoxide gas generating raw material Sr after the dry-treatment to a predetermined temperature through a process to be described later. As such active material particles, for example, silicon oxide particles or metal element-containing silicon oxide particles used as active materials of electrodes (particularly, negative electrodes) of a lithium ion secondary battery is used.

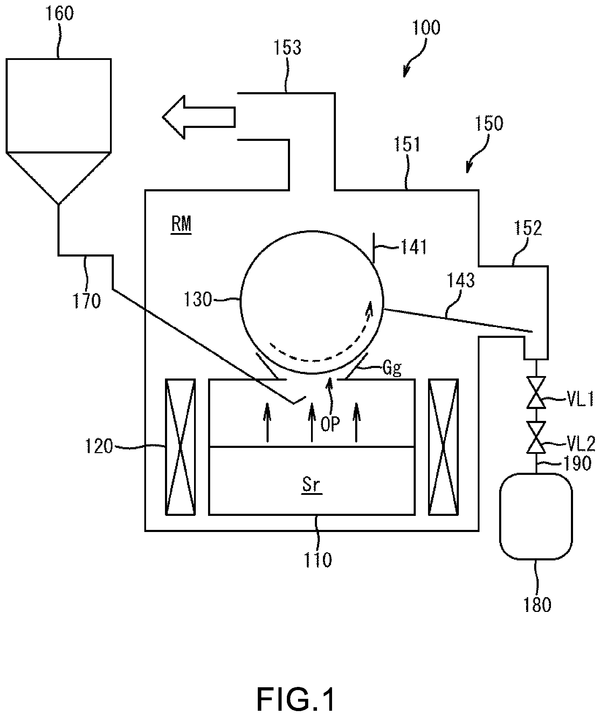

Incidentally, in order to finally manufacture the active material particles using the silicon monoxide gas generating raw material Sr according to the embodiment of the present invention, it is preferable to use a vapor-deposition apparatus 100 as shown in Fig. 1. The vapor-deposition apparatus 100 is excellent from the viewpoint of suppression of manufacturing costs and the like. Hereinafter, the vapor-deposition apparatus 100 will be described in detail.

As shown in Fig. 1, the vapor-deposition apparatus 100 mainly comprises a crucible 110, a heater 120, a vapor-deposition drum 130, a scraper 141, a particle guide 143, a chamber 150, a raw material supply hopper 160, a raw material introducing pipe 170, a collection container 180, a first valve VL1, and a second valve VL2.

As shown in Fig. 1, the crucible 110 is a heat resistant container having an opening in the central portion of the top wall, and is installed in the chamber 150. Further, a through hole (not shown) is formed in one portion around the top wall of the crucible 110, and the raw material introducing pipe 170 is inserted into the through hole. That is, the silicon monoxide gas generating raw material Sr after being dry-treated in the raw material supply hopper 160 is supplied to the crucible 110 through the raw material introducing pipe 170. Further, the gas guide Gg is disposed on the upper side of the top wall of the crucible 110. The gas guide Gg is a member for guiding the silicon monoxide gas generated in the crucible 110 to the vapor-deposition drum 130, and is installed on the upper surface of the top wall so as to surround the central portion of the top wall as shown in Fig. 1.

The heater 120 is for heating the crucible 110 at a high temperature, and is disposed so as to take in the outer periphery of the crucible 110.

The vapor-deposition drum 130 is, for example, a cylindrical horizontal drum, and is disposed above the opening OP of the top wall of the crucible 110 as shown in Fig.1, and the lower portion of the vapor-deposition drum 130 is surrounded by the gas guide Gg. Then, the vapor-deposition drum 130 is driven to rotate in one direction by a driving mechanism which is not shown. Incidentally, a temperature controller (not shown) for maintaining the outer peripheral surface at a constant temperature is provided on the vapor-deposition drum 130. The temperature controller cools the outer peripheral surface temperature of the vapor-deposition drum 130 to a temperature suitable for vapor-deposition of the vapor-deposition source gas by a cooling medium supplied from the outside. In addition, the outer peripheral surface temperature of the vapor-deposition drum 130 may affect the crystallinity of the deposit accumulated on the deposit remaining on the vapor-deposition drum. If this temperature is too low, the tissue structure of the deposit may become too sparse, and on the contrary, if this temperature is too high, crystal growth due to the disproportionation reaction may proceed. When the silicon monoxide gas is vapor-deposited, this temperature is preferably 900°C or less, more preferably within a range of 150°C or more and 800°C or less, particularly preferably within a range of 150°C or more and 700°C or less.

The scraper 141 is a member that serves to scrape the thin film formed on the vapor-deposition drum from the vapor-deposition drum 130. The scraped-off thin film pieces (active material particles) fall into the particle guide 143. Further, the material of the scraper 141 affects impurity contamination of the active material particles. From the viewpoint of suppressing the affect, the material of the scraper 141 is preferably stainless steel or ceramic, particularly preferably ceramic. In addition, the scraper 141 is preferably not in contact with the outer peripheral surface of the vapor-deposition drum 130. This is because the impurity contamination that may occur due to direct contact between the vapor-deposition drum 130 and the scraper 141 can be prevented from being mixed into the collected active material particles.

The particle guide 143 is, for example, a vibrating conveying member and is disposed so as to be inclined downward from the vicinity of the vapor-deposition drum 130 toward the collection portion 152 of the chamber 150 as shown in Fig.1, and receives thin film pieces scraped off by the scraper 141 disposed above to send the thin film pieces to the collection portion 152 of the chamber 150.

As shown in Fig.1, the chamber 150 is mainly formed of a chamber body portion 151, a collection portion 152, and an exhaust pipe 153. As shown in Fig.1, the chamber body portion 151 is a box-shaped portion having a deposition chamber RM inside, and houses the crucible 110, the heater 120, the vapor-deposition drum 130, the scraper 141, and the particle guide 143. As shown in Fig.1, the collection portion 152 is a portion protruding outward from the side wall of the chamber body portion 151, and has a space communicating with the deposition chamber RM of the chamber body portion 151. As described above, the distal end portion of the particle guide 143 is located in the collection portion 152.

The raw material supply hopper 160 is a supply source of the silicon monoxide gas generating raw material. As shown in Fig.1, an outlet of the raw material supply hopper is connected to the raw material introducing pipe 170. That is, the silicon monoxide gas generating raw material Sr after being dry-treated charged into the raw material supply hopper 160 is continuously supplied to the crucible 110 via the raw material introducing pipe 170 at appropriate timing. Incidentally, the silicon monoxide gas generating raw material Sr after being dry-treated supplied to the crucible 110 becomes silicon monoxide gas.

The raw material introducing pipe 170 is nozzle having a round hole shape for continuously charging the silicon monoxide gas generating raw material Sr after being dry-treated which is charged into the raw material supply hopper 160 into the crucible 110, and is disposed so that the outlet faces upward in the central portion of the top plate portion of the crucible 110.

The collection container 180 is a container for collecting thin film pieces that have passed through the first valve VL1 and the second valve VL2.

The first valve VL1 and the second valve VL2 adjust the collection amount of the thin film pieces into the collection container 180 by opening and closing, and are provided in a collection pipe 190 connecting the collection portion 152 of the chamber 150 and the collection container 180.

Hereinafter, a description will be given of a case where silicon oxide particles or metal element-containing silicon oxide particles used for a negative electrode material for a lithium ion secondary battery is finally manufactured from the silicon monoxide gas generating raw material Sr by using the vapor-deposition apparatus 100 described above.

First, the silicon monoxide gas generating raw material Sr is dry-treated (e.g., heat-drying, reduced pressure drying). Here, When the silicon monoxide gas generating raw material Sr is dry-treated by, for example, heat-drying, it is preferable that the silicon monoxide gas generating raw material Sr is dry-treated within a range of 100°C or more and 400°C or less for the period within a range of 1 hour or more and 240 hours or less, more preferably within a range of 200°C or more and 350°C or less for the period within a range of 4 hours or more and 120 hours or less. Further, when the silicon monoxide gas generating raw material Sr is dry-treated by, for example, reduced pressure drying, it is preferable that the silicon monoxide gas generating raw material is dry-treated under reduced pressure in which the pressure is controlled by a vacuum pump so as to be within a range of 10Pa or more and 100Pa or less for the period within a range of 12 hours or more and 120 hours or less and, and more preferable that the silicon monoxide gas generating raw material is dry-treated under reduced pressure in which the pressure is controlled by a vacuum pump so as to be within a range of 0.1Pa or more and 100Pa or less for the period within a range of 12 hours or more and 240 hours or less. When the silicon monoxide gas generating raw material Sr is dry-treated under these conditions, water in the silicon monoxide gas generating raw material Sr can be removed without generating the silicon monoxide gas as much as possible. Then, as described above, the water content of the silicon monoxide gas generating raw material Sr after being dry-treated is 0.6 wt % or less, preferably 0.3 wt % or less, more preferably 0.1 wt % or less. Further, the silicon monoxide gas generating raw material Sr after being dry-treated is preferably stored in a sealed container or under reduced pressure.

Next, the silicon monoxide gas generating raw material Sr after being dry-treated is charged into the raw material supply hopper 160. Then, the silicon monoxide gas generating raw material Sr after being dry-treated is continuously charged into the crucible 110 from the raw material supply hopper 160 via the raw material introducing pipe 170.

Next, when the silicon monoxide gas generating raw material Sr after being dry-treated is charged into the crucible 110, the crucible 110 is heated by the heater 120 while the pressure in the deposition chamber RM is reduced. Incidentally, when the water content (wt %) of the silicon monoxide gas generating raw material Sr is high, a large amount of water vapor, a large amount of hydrogen gas, and the like are generated by the heating of the heater 120. When a large amount of water vapor, a large amount of hydrogen gas, or the like is generated, the pressure in the deposition chamber RM increases. Then, if the pressure in the deposition chamber RM is too high, the reaction that generates the silicon monoxide gas from the silicon monoxide gas generating raw material Sr after being dry-treated is less likely to occur. Here, the pressure in the deposition chamber RM is preferably 100Pa or less, more preferably 75Pa or less, particularly preferably 20Pa or less. Further, the temperature in the deposition chamber RM affects the reaction rate of silicon monoxide. If the temperature is too low, the reaction rate becomes slow, and if the temperature is too high, there are concerns that side reaction due to the melting of the silicon monoxide gas generating raw material Sr after being dry-treated will proceed, energy efficiency will decrease and so on. Also, there is a concern that the crucible 110 may be damaged at the temperature. From this viewpoint, the temperature in the deposition chamber RM is preferably within a range of 1000 °C or more and 1600 °C or less, more preferably within a range of 1100 °C or more and 1500 °C or less, particularly preferably within a range of 1100 °C or more and 1400 °C or less.

As described above, by heat-treating under reduced pressure the silicon monoxide gas generating raw material Sr after being dry-treated, the silicon monoxide gas is generated from the silicon monoxide gas generating raw material Sr after being dry-treated in the crucible 110. The silicon monoxide gas is supplied to the vapor-deposition drum 130 through the gas guide Gg. At this time, the vapor-deposition drum 130 is rotatably driven by a driving source. Incidentally, the temperature of the outer peripheral surface of the vapor-deposition drum 130 is set lower than the temperature in the deposition chamber RM. More specifically, the temperature is set lower than the condensation temperature of the silicon monoxide gas. With this setting, the silicon monoxide gas generated from the crucible 110 is vapor-deposited, deposited and accumulated on the outer peripheral surface of the rotating vapor-deposition drum 130. Then, a thin film is formed on the vapor-deposition drum 130. Thereafter, the thin film on the vapor-deposition drum 130 comes into contact with the scraper 141, and the thin film is scraped off from the vapor-deposition drum 130. Incidentally, the scraped off pieces of the thin film (active material particles) fall along the outer peripheral surface of the vapor-deposition drum 130 to the particle guide 143.

In the vapor-deposition apparatus 100 of the present embodiment, as described above, high quality active material particles are finally manufactured from the silicon monoxide gas generating raw material Sr.

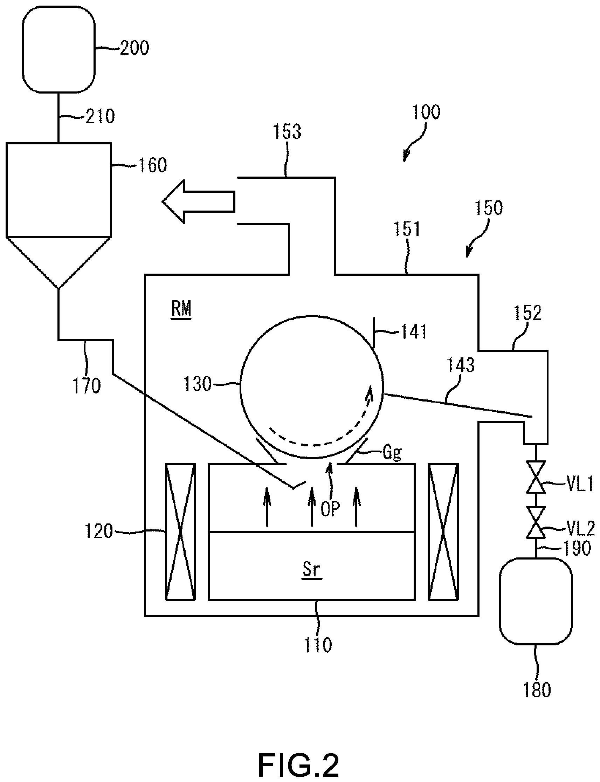

Incidentally, when the silicon monoxide gas generating raw material Sr after being dry-treated is charged into the raw material supply hopper 160, it is preferable to prevent the silicon monoxide gas generating raw material Sr after being dry-treated from being exposed to the atmosphere. This is because water in the atmosphere may adsorb to the silicon monoxide gas generating raw material Sr after being dry-treated. The vapor-deposition apparatus 100 may comprise, for example, a drying mechanism 200 and a raw material introducing pipe 210 (see Fig.2) so that the silicon monoxide gas generating raw material Sr after being dry-treated is not exposed to the atmosphere. According to this configuration, first, as shown in Fig.2, the silicon monoxide gas generating raw material Sr before being dry-treated is charged into the drying mechanism 200. Then, the silicon monoxide gas generating raw material Sr is dry-treated in the drying mechanism 200, and water vapor is discharged from a steam port (not shown) of the drying mechanism 200. Here, as described above, when the silicon monoxide gas generating raw material Sr is dry-treated by, for example, heat-drying, it is preferable that the silicon monoxide gas generating raw material Sr is dry-treated within a range of 100°C or more and 400°C or less for the period within a range of 1 hour or more and 240 hours or less, more preferably within a range of 200°C or more and 350°C or less for the period within a range of 4 hours or more and 120 hours or less. Further, when the silicon monoxide gas generating raw material Sr is dry-treated by, for example, reduced pressure drying, it is preferable that the silicon monoxide gas generating raw material is dry-treated under reduced pressure in which the pressure is controlled by a vacuum pump so as to be within a range of 10Pa or more and 100Pa or less for the period within a range of 12 hours or more and 120 hours or less, and more preferable that the silicon monoxide gas generating raw material is dry-treated under reduced pressure in which the pressure is controlled by a vacuum pump so as to be within a range of 0.1Pa or more and 100Pa or less for the period within a range of 12 hours or more and 240 hours or less. Then, the silicon monoxide gas generating raw material Sr after being dry-treated is charged into the raw material supply hopper 160 from the drying mechanism 200 via the raw material introducing pipe 210. With this configuration, it is possible to prevent the silicon monoxide gas generating raw material Sr after being dry-treated from being exposed to the atmosphere.

Hereinafter, working examples and comparative examples are described in order to explain the present invention in more detail, but the present invention is not limited to these examples.

### WORKING EXAMPLE 1

The silicon monoxide (SiO) gas generating raw material Sr containing silicon dioxide (SiO₂) and silicon (Si) was dry-treated at 200°C for 4 hours. The weight of this silicon monoxide gas generating raw material Sr was 524g. Further, when the water content of this silicon monoxide gas generating raw material Sr was measured by a heat drying type water meter, the water content was 0.05 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the silicon oxide particles (weights: 487g) used for the negative electrode material for lithium ion secondary battery were finally manufactured. At this time, the pressure in the deposition chamber RM was increased to 15Pa, and the reaction rate (weight of the particles/amount of the charged raw material×100) was 93%.

### WORKING EXAMPLE 2

The silicon monoxide gas generating raw material Sr containing silicon dioxide and silicon was dry-treated at 100°C for 1 hour. The weight of this silicon monoxide gas generating raw material Sr was 507g. Further, when the water content of the silicon monoxide gas generating raw material Sr was measured by a heat drying type water meter, the water content was 0.29 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the silicon oxide particles (weights: 446g) used for the negative electrode material for lithium ion secondary battery were finally manufactured. At this time, the pressure in the deposition chamber RM increased to 38Pa, and the reaction rate was 88%.

### WORKING EXAMPLE 3

The silicon monoxide gas generating raw material Sr containing silicon dioxide and silicon was dry-treated under reduced pressure in 100Pa for 12 hours. The weight of this silicon monoxide gas generating raw material Sr was 520g. Further, when the water content of this silicon monoxide gas generating raw material Sr was measured by a heat drying type water meter, the water content was 0.33 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the silicon oxide particles (weights: 447g) used for the negative electrode material for lithium ion secondary battery were finally manufactured. At this time, the pressure in the deposition chamber RM increased to 44Pa, and the reaction rate was 86%.

### WORKING EXAMPLE 4

The silicon monoxide gas generating raw material Sr containing lithium silicate (Li₂Si₂O₅) and silicon was dry-treated at 200°C for 4 hours. The weight of this silicon monoxide gas generating raw material Sr was 508g. Further, when the water content of this silicon monoxide gas generating raw material Sr was measured by a heat drying type water meter, the water content was 0.05 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the metal element-containing silicon oxide particles (weights: 477g) used for the negative electrode material for lithium ion secondary battery were finally manufactured. At this time, the pressure in the deposition chamber RM increased to 16Pa, and the reaction rate was 94%.

### (COMPARATIVE EXAMPLE 1)

When the water content of the silicon monoxide gas generating raw material Sr (without drying treatment) (weight: 530g) containing silicon dioxide and silicon was measured by a heat drying type water meter, the water content was 0.96 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the silicon oxide particles (weights: 360g) used for the negative electrode material for lithium ion secondary battery were finally manufactured. At this time, the pressure in the deposition chamber RM increased to 123Pa, and the reaction rate was 68%.

### (COMPARATIVE EXAMPLE 2)

The silicon monoxide gas generating raw material Sr containing silicon dioxide and silicon was dry-treated at 100°C for 1 hour. The weight of this silicon monoxide gas generating raw material Sr was 511g. Further, this silicon monoxide gas generating raw material Sr was exposed to the atmosphere for 24 hours. The weight of the silicon monoxide gas generating raw material Sr after being exposed to the atmosphere was 513g. Then, the water content of this silicon monoxide gas generating raw material Sr was measured by a heat drying type water meter, and the water content was 0.68 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the silicon oxide particles (weights: 393g) used for the negative electrode material for lithium ion secondary battery were finally manufactured. At this time, the pressure in the deposition chamber RM increased to 80Pa, and the reaction rate was 74%.

### (COMPARATIVE EXAMPLE 3)

When the water content of the silicon monoxide gas generating raw material Sr (without drying treatment) (weight: 503g) containing lithium silicate (Li₂Si₂O₅) and silicon was measured by a heat drying type water meter, the water content was 0.81 wt %. Then, using the vapor-deposition apparatus 100 shown in Fig.1, this silicon monoxide gas generating raw material Sr was continuously charged into the crucible 110 in the deposition chamber RM (pressure: 10Pa, temperature: 1300°C.) for 2 hours. Then, the silicon monoxide gas was generated, and the reactor was stopped 30 minutes after the completion of charging the silicon monoxide gas generating raw material Sr. After that, through the above described steps, the metal element-containing silicon oxide particles (weights: 312g) used for the negative electrode material for lithium ion secondary battery were finally manufactured. At this time, the pressure in the deposition chamber RM increased to 104Pa, and the reaction rate was 62%.

## Claims

1. A silicon monoxide gas generating raw material having a water content of 0.6 wt % or less.

2. The silicon monoxide gas generating raw material according to claim 1 containing at least one of silicon dioxide (SiO₂) and silicate, and silicon (Si).

3. The silicon monoxide gas generating raw material according to claim 2, wherein the silicate is lithium silicate.

4. A method for continuously generating silicon monoxide gas, wherein the silicon monoxide gas generating raw material according to any one of claims 1 to 3 is continuously charged into a reaction chamber for generating silicon monoxide (SiO) gas.
